# EUROPEAN PATENT APPLICATION

(11) **EP 2 444 891 A2**
(43) Date of publication of application: **25.04.2012**
(21) Application number: 10789643.3
(22) Date of filing: 01.06.2010
(51) Int. Cl.: G06F 3/14

(54) **SIGNAL TRANSMISSION METHOD, SIGNAL TRANSMISSION APPARATUS AND SIGNAL TRANSMISSION SYSTEM**

(30) Priority: 15.06.2009 KR 20090052823
(71) Applicant: Samsung Electronics Co., Ltd., Suwon-si, Gyeonggi-do 442-742 (KR)
(72) Inventor: OH, Sung-Bo, Suwon-si Gyeonggi-do 443-822 (KR); PARK, Jong-Wook, Seoul 135-841 (KR); LEE, Sung-Han, Suwon-si Gyeonggi-do 443-370 (KR)
(74) Representative: Fearnside, Andrew Simon
(86) International application number: PCT/KR2010/003497
(87) International publication number: WO 2010/147316

(57) **Abstract**

A signal transmission method, a signal transmission apparatus, and a signal transmission system are provided. The signal transmission method includes transmitting a test signal via at least one of a plurality of lines that constitute a channel; receiving transmission state information indicating a state of the transmission of the test signal; and changing a number of lines for transmitting a main signal based on the transmission state information.

## Description

### Technical Field

The present invention relates to a signal transmission method, a signal transmission apparatus, and a signal transmission system, and more particularly, to a signal transmission method, a signal transmission apparatus, and a signal transmission system for transmitting signals during a digital communication.

### Background Art

Transition minimized differential signaling (TMDS) has been widely used in various digital communication fields such as, for example, High-Definition Multimedia Interface (HDMI), Digital Visual Interface (DVI), Ethernet, and the like. TMDS has attracted attention for its various advantages such as a differential use of voltages/currents, the use of low voltage differences, and the use of a serial data transmission method. TMDS can reduce the influence of external noise and electromagnetic influence (EMI), and can prevent the waste of power.

However, typical TMDS-based signal transmission methods involve transmitting signals via two single lines without considering the state of the transmission of the signals, and may result in not only an increased power consumption but also the occurrence of EMI, which often happens in the case of using a single line to transmit signals.

Therefore, a method is needed to transmit signals in consideration of the state of the transmission of the signals, instead of uniformly transmitting the signals, so as to reduce the consumption of power and the occurrence of EMI.

### Technical Problem

The present invention provides a signal transmission method, a signal transmission apparatus, and a signal transmission system which can reduce the consumption of power and the occurrence of electromagnetic interference (EMI).

### Technical Solution

According to an exemplary aspect of the present invention, there is provided a signal transmission method including: transmitting a test signal via at least one of a plurality of lines that constitute a channel; receiving transmission state information indicating a state of the transmission of the test signal; and changing a number of lines for transmitting a main signal based on the transmission state information.

The transmission state information may include information on an error rate of the test signal.

The transmitting may include transmitting the test signal via two lines of the channel according to transition minimized differential signaling (TMDS).

The changing may include, in response to the transmission state information being higher than a predefined level, changing the number of lines to one such that the main signal can be transmitted via one line.

The changing may include, in response to the transmission state information being lower than a predefined level, maintaining the number of lines such that the main signal can continue to be transmitted via the two lines.

The changing may include, in response to the test signal being transmitted via a plurality of channels and transmission state information indicating a state of the transmission of the test signal via each of the channels being received from each of the channels, changing the number of lines separately for each of the lines based on the transmission state information for each of the channels.

The receiving may include receiving the transmission state information via at least one of the lines or another line.

The test signal may be part of the main signal.

The signal transmission method may also include: transmitting the main signal via the changed number of lines; and additionally changing the number of lines, during the transmission of the main signal, based on a state of the transmission of the main signal.

The transmitting may include transmitting the test signal before the transmission of the main signal.

The transmitting may include transmitting the test signal periodically or aperiodically during the transmission of the main signal.

According to another exemplary aspect of the present invention, there is provided a signal transmission apparatus including: a transmitter which transmits a test signal via at least one of a plurality of lines that constitute a channel; a receiver which receives transmission state information indicating a state of the transmission of the test signal; and a controller which changes a number of lines for transmitting a main signal based on the transmission state information.

The transmission state information may include information on an error rate of the test signal.

The transmitter may transmit the test signal via two lines of the channel according to TMDS.

In response to the transmission state information being higher than a predefined level, the controller may change the number of lines to one so that the main signal can be transmitted via one line.

In response to the transmission state information being lower than a predefined level, the controller may maintain the number of lines such that the main signal can continue to be transmitted via the two lines.

In response to the test signal being transmitted via a plurality of channels and transmission state information indicating a state of the transmission of the test signal via each of the channels being received from each of the channels, the controller may change the number of lines separately for each of the lines based on the transmission state information for each of the channels.

The receiver may receive the transmission state information via at least one of the lines or another line.

The test signal may be part of the main signal.

The controller may transmit the main signal via the changed number of lines, and additionally changes the number of lines, during the transmission of the main signal, based on a state of the transmission of the main signal.

The test signal may be transmitted before the transmission of the main signal.

The test signal may be transmitted periodically or aperiodically during the transmission of the main signal.

According to another exemplary aspect of the present invention, there is provided a signal transmission system including: a receiving apparatus which receives a signal via one of a plurality of lines that constitute a channel, determines an error rate of the received signal, and feeds back the determined error rate to a transmitting apparatus; and the transmitting apparatus which transmits a test signal to the receiving apparatus, receives an error rate of the test signal from the receiving apparatus, and changes a number of lines for transmitting a main signal based on the received error rate.

### Advantageous Effects

According to embodiments of the present invention, it is possible to effectively reduce the consumption of power and the occurrence of electromagnetic interference (EMI), as compared to the case of uniformly transmitting signals using transition minimized differential signaling (TMDS). In addition, when transmitting signals via one of two lines of a channel, the other line may be used for other communication purposes. Therefore, it is possible to double the speed of the transmission of signals.

### Description of Drawings

The accompanying drawings, which are included to provide a further understanding of the invention and are incorporated in and constitute a part of this specification, illustrate embodiments of the invention, and together with the description serve to explain the principles of the invention.
FIG. 1 is a diagram illustrating a signal transmission system according to an embodiment of the present invention.
FIG. 2 is a diagram illustrating an example of transmitting signals from a transition minimized differential signaling (TMDS) transmitter to a TMDS receiver via channels 0, 1, and 2.
FIG. 3 is a diagram illustrating an example of an HMDI interface.
FIGS. 4 and 5 are diagrams illustrating an example of transmitting signals between a high-definition multimedia interface transmitter and an HDMI receiver.
FIG. 6 is a flowchart illustrating a method of determining the quality of reception based on error rate, which is performed by a transmitter.

### Mode for Invention

The invention is described more fully hereinafter with reference to the accompanying drawings, in which exemplary embodiments of the invention are shown.

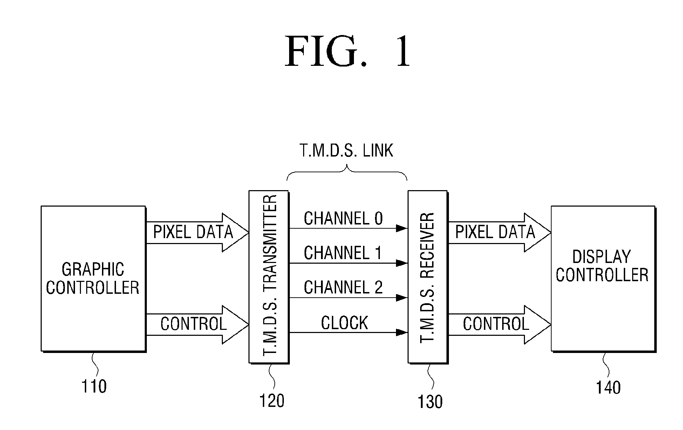

FIG. 1 is a diagram illustrating a signal transmission system according to an embodiment of the present invention, and particularly, a system for transmitting signals using transition minimized differential signaling (TMDS).

TMDS is a method of transmitting high-speed parallel data, and is used in digital visual interfaces and HDMI video interfaces.

Referring to FIG. 1, the system includes a TMDS transmitter 120, a TMDS receiver 130, and a control unit. The control unit includes a graphic controller 110 for controlling the TMDS controller 120 and a display controller 140 for controlling the TMDS receiver 130.

For example, the graphic controller 110 may be a graphic card installed in a personal computer (PC) or a unit for controlling a graphic card. The graphic controller 110 may generate red (R), green (G), and blue (B) pixel data signals to be displayed on a screen and a control signal for controlling the TMDS transmitter 120, and may transmit the R, G, and B pixel data signals and the control signal to the TMDS transmitter 120.

The graphic controller 110 may control signaling between the TMDS transmitter 120 and the TMDS receiver 130 using the control signal.

The TMDS transmitter 120 may transmit the pixel data signal, which is provided by the graphic controller 110, to the TMDS receiver 130 via channels 0, 1, and 2, and may transmit a clock signal for being synchronized with the TMDS receiver 130 to the TMDS receiver 130.

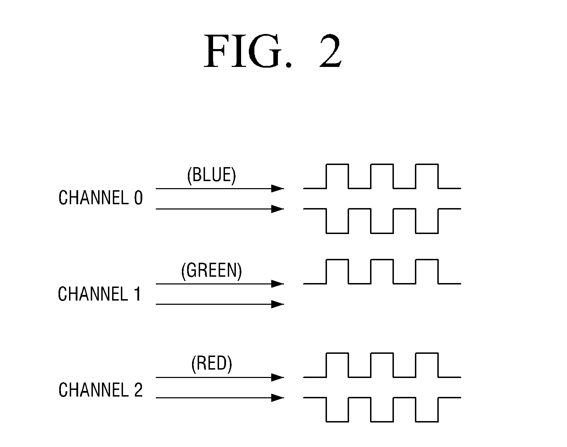

The transmission of the pixel data signal is further described with reference to FIG. 2. FIG. 2 is a diagram illustrating an example of transmitting signals from the TMDS transmitter 120 to the TMDS receiver 130 via channels 0, 1, and 2.

Referring to FIG. 2, according to TMDS, each of channels 0, 1, and 2 may include two lines. Therefore, the B pixel data signal provided by the graphic controller 110 may be transmitted from the TMDS transmitter 120 to the TMDS receiver 130 via two lines of channel 0, and the two lines of channel 0 may respectively transmit signals that are symmetrical. Similarly, the R pixel data signal may be transmitted from the TMDS transmitter 120 to the TMDS receiver 130 via two lines of channel 2, and the two lines of channel 2 may respectively transmit signals that are symmetrical.

For example, the G pixel data signal, like the B or R pixel data signal, may be transmitted via two lines of channel 1. In another example, referring to FIG. 2, the G pixel data signal may be transmitted via only one of the two lines of channel 1.

The method in which to transmit a pixel data signal via each channel may vary in accordance with a control signal provided by the graphic controller 110. That is, in response to the receipt of a control signal for transmitting a pixel data signal via two lines, the TMDS transmitter 120 may transmit a pixel data signal to the TMDS receiver 130 via two lines. On the other hand, in response to the receipt of a control signal for transmitting a pixel data signal via a single line, the TMDS transmitter 120 may transmit a pixel data signal to the TMDS receiver 130 via one line.

As shown in FIG. 2, it may be set differently for different channels whether to transmit a pixel data signal via one line or two lines.

In the case of transmitting a pixel data signal via one of two lines of each channel, the other line may be used to transmit other data.

A determination may be made as to whether to transmit a pixel data signal via one line or two lines based on the state of the transmission of the pixel data signal and whether there is any damaged or broken line between the two lines. For example, in a case in which it is determined that the reception quality of a pixel data signal transmitted via one line is not bad, the graphic controller 110 may control the TMDS transmitter 120 to continue to transmit a pixel data signal via one line. On the other hand, in a case in which it is determined that a pixel data signal transmitted via two lines is received with a higher error rate than a predefined level due to a deteriorating reception quality, the graphic controller 110 may control the TMDS transmitter 120 to continue to transmit a pixel data signal via two lines. For example, in a case in which it is determined that the quality of reception has deteriorated when using one line, the graphic controller 110 may control the TMDS transmitter 120 to use two lines to transmit a pixel data signal. On the other hand, in a case in which it is determined that it is determined that the quality of reception has not deteriorated when using two lines, the graphic controller 110 may control the TMDS transmitter 120 to use one line to transmit a pixel data signal.

In this manner, it is possible to reduce the consumption of power and the occurrence of electromagnetic interference (EMI), as compared to the case of uniformly transmitting a pixel data signal using TMDS, by transmitting a pixel data signal via one line in a case in which the quality of reception is good, and transmitting a pixel data signal via two lines in a case in which the quality of reception is bad.

In addition, by transmitting a pixel data signal via one communication line and using another communication line for other communication purposes, it is possible to double the speed of the transmission of data as compared to TMDS.

Referring back to FIG. 1, the TMDS transmitter 120 may transmit a pixel data signal to the TMDS receiver 130 via one or two lines under the control of the graphic controller 110 based on the quality of the pixel data signal.

The TMDS receiver 130 may receive a pixel data signal and a control signal from the TMDS transmitter 120, and may transmit the received pixel data signal and the received control signal to the display controller 140. The TMDS receiver 130 may receive a clock signal from the TMDS transmitter 120, and may be synchronized with the TMDS transmitter 120 by the clock signal.

The TMDS transmitter 110 and the TMDS receiver 120 may be collectively referred to as a TMDS link. In general, a TMDS link is classified into a single link having three data channels and a clock as a set or a dual link having six data channels and a clock as a set. For example, assume that the TMDS link is a single link.

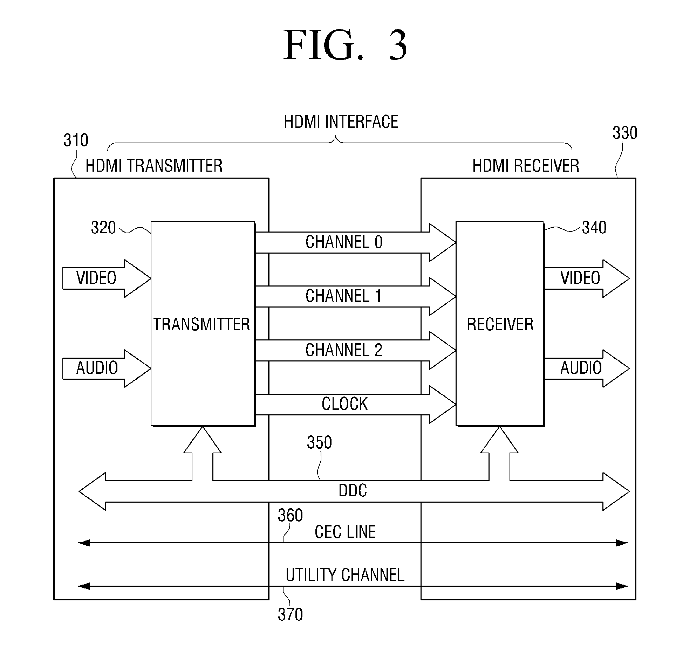

The display controller 140 may be a monitor or a unit for controlling a monitor. The display controller 140 may receive a pixel data signal and a control signal from the TMDS receiver 130, and may control the pixel data signal to be displayed on the screen of a monitor. As described above, a pixel data signal may be transmitted using one line or two lines. A method to determine whether to transmit a pixel data signal using one line or two lines is described with reference to FIG. 3.

FIG. 3 is a diagram illustrating an example of a High-Definition Multimedia Interface (HDMI) interface. Referring to FIG. 3, the HDMI interface is an audio/video (A/V) interface for transmitting an A/V signal and a control signal while maintaining compatibility with Digital Visual Interface (DVI). The HDMI interface may include an HDMI transmitter 310 and an HDMI receiver 330. The HDMI transmitter 310 and the HDMI receiver 330 may transmit signals to or receive signals from each other by using TMDS.

The HDMI transmitter 310 may include a transmitter 320. The transmitter 320 may receive a video signal and an audio signal from an external source, and may transmit the video signal and the audio signal to a receiver 340 of the HDMI receiver 330 via channels 0, 1, and 2. The transmitter 320 may transmit a clock signal for being synchronized with the receiver 340.

The transmitter 320 may encode signals, and may transmit the encoded signals via channels 0, 1, and 2. The receiver 340 may receive the encoded signals from the transmitter 320, and may decode the received encoded signals. The signals encoded by the transmitter 320 and the signals decoded by the receiver 340 may include R, G, and B data signals, a control signal, a horizontal synchronization signal, a vertical synchronization signal, and a data enable signal.

The HDMI receiver 330 may include the receiver 340. The receiver 340 may receive a video signal and an audio signal from the transmitter via channels 0, 1, and 2, and may receive a clock signal for being synchronized with the transmitter 320.

The HDMI transmitter 310 and the HDMI receiver 320 may be connected to each other via a display data channel (DDC) 350, which is a standard created by the Video Electronics Standards Association (VESA) for transmitting information such as a horizontal or vertical frequency to a receiver so as to set an environment for the receiver or for reading and recognizing information on the receiver and setting new information in the receiver based on the recognized information.

The HDMI transmitter 310 and the HDMI receiver 320 may be connected to a consumer electronic control (CEC) line 360. The CEC line 360 may be used to control the system between the HDMI transmitter 310 and the HDMI receiver 320.

To determine whether to transmit a signal via one line or via two lines, the HDMI transmitter 310 may transmit a test signal to the receiver 340 of the HDMI receiver 330 via the transmitter 320.

The test signal may be a differential signal that may be transmitted using two lines of each channel according to TMDS, or may be a single-line signal that may be transmitted via one line of each channel.

The HDMI receiver 320 may receive the test signal, and may determine whether the reception state of the test signal is good, and may feed back the results of the determination to the HDMI transmitter 310. The reception state of the test signal may be determined by determining the error rate of the test signal based on the parity bit of the test signal or the opening ratio of an eye pattern for measuring the physical quality of a signal at the HDMI receiver 320.

For example, if the error rate of the test signal is higher than a reference level set by a user, the HDMI receiver 320 may transmit information indicating that a channel state or the quality of reception is bad to the HDMI transmitter 310. On the other hand, if the error rate of the test signal is lower than the reference level, the HDMI receiver 320 may transmit information indicating that the channel state or the quality of reception is good to the HDMI transmitter 310.

In this example, the HDMI receiver 320 may use the DDC 350, the CEC line 360, a utility channel 370 (for example, an audio return channel or an Ethernet channel), or another channel to notify the HDMI transmitter 310 whether the channel state and the quality of reception is good or bad.

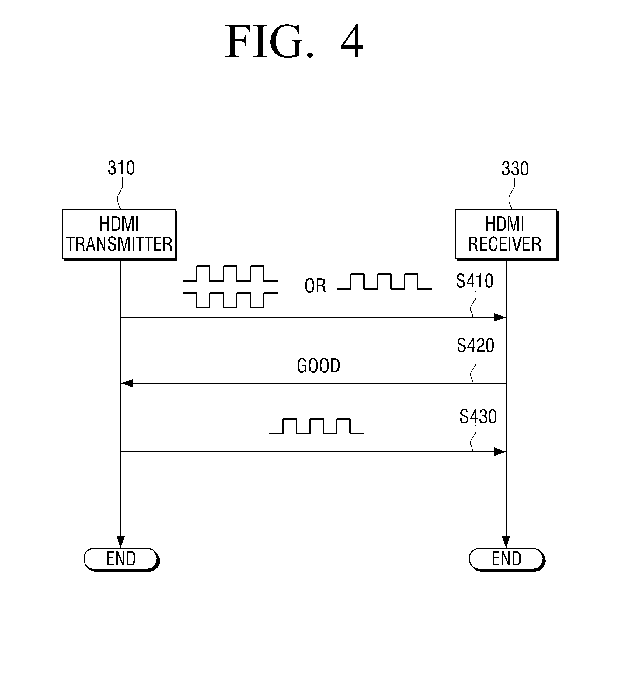

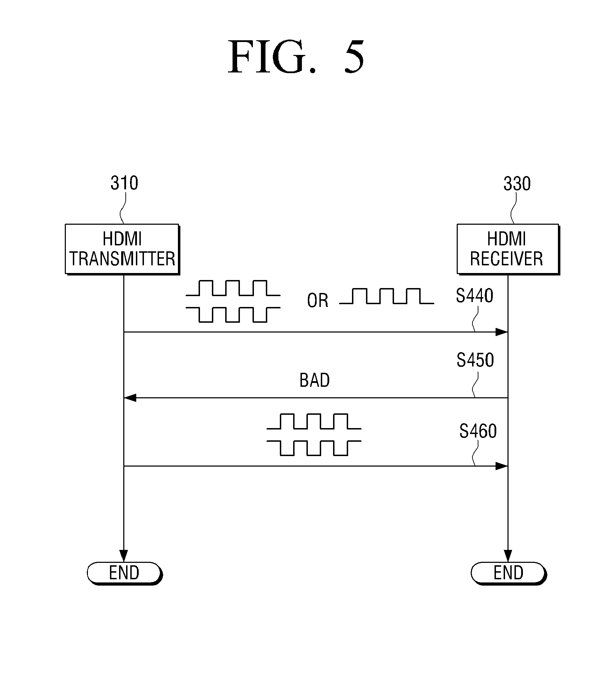

In a case in which the channel state is determined to be good, the HDMI transmitter 310 may transmit a data signal using only one of two lines of a channel, instead of using two lines of a channel. On the other hand, in a case in which the channel state is determined to be bad, the HDMI transmitter 310 may transmit a data signal using two lines of a channel. The transmission of signals between the HDMI transmitter 310 and the HDMI receiver 330 is further described with reference to FIGS. 4 and 5. FIGS. 4 and 5 are diagrams illustrating examples of transmitting signals between the HDMI transmitter 310 and the HDMI receiver 330.

FIG. 4 illustrates an example of transmitting signals between the HDMI transmitter 310 and the HDMI receiver 330 in a case in which a channel state (or the quality of reception) is good. Referring to FIG. 4, to transmit a main signal, the HDMI transmitter 310 may transmit a differential signal or a single-line signal to the HDMI receiver 330 as a test signal by using TMDS (S410). A user may determine whether to transmit a differential signal or a single-line signal as the test signal. If information on a previous test signal is stored, a signal of the same type as the previous test signal may be automatically selected as the test signal.

The HDMI receiver 330 may determine the error rate of the test signal based on the parity bit of the test signal and the opening ratio of an eye pattern for measuring the physical quality of a signal at the HDMI receiver 330. The HDMI receiver 330 may determine whether the reception quality of the test signal is good or bad by determining whether the error rate of the test signal is lower or higher than a predefined level.

In a case in which the reception quality of the test signal is determined to be good, the HDMI receiver 330 may transmit information indicating that the reception quality of the test signal is good to the HDMI transmitter 310 (S420). The HDMI transmitter 310 may transmit a main signal to the HDMI receiver 330 via one of two lines of a channel (S430).

The transmission of a test signal, the determination of the error rate of the test signal, the determination of the reception quality of the test signal, and the transmission of a main signal may be performed for each channel, and a determination may be made for each channel as to whether to transmit a main channel via one line or via two lines.

FIG. 5 illustrates an example of transmitting signals between the HDMI transmitter 310 and the HDMI receiver 330 in a case in which a channel state (or the quality of reception) is bad. Referring to FIG. 5, to transmit a main signal, the HDMI transmitter 310 may transmit a differential signal or a single-line signal to the HDMI receiver 330 as a test signal by using TMDS (S440). In the example illustrated in FIG. 5, like in the example illustrated in FIG. 4, a user may determine whether to transmit a differential signal or a single-line signal as the test signal. If information on a previous test signal is stored, a signal of the same type as the previous test signal may be automatically selected as the test signal.

The HDMI receiver 330 may determine the error rate of the test signal based on the parity bit of the test signal, and may determine whether the reception quality of the test signal is good or bad by determining whether the error rate of the test signal is lower or higher than a predefined level.

In a case in which the reception quality of the test signal is determined to be bad, the HDMI receiver 330 may transmit information indicating that the reception quality of the test signal is bad to the HDMI transmitter 310 (S450). The HDMI transmitter 310 may transmit a main signal to the HDMI receiver 330 via two lines of a channel (S460).

The transmission of a test signal, the determination of the error rate of the test signal, the determination of the reception quality of the test signal, and the transmission of a main signal may be performed for each channel, and a determination may be made for each channel as to whether to transmit a main channel via one line or via two lines.

In this manner, it is possible to effectively reduce the consumption of power and the occurrence of EMI, as compared to the case of uniformly transmitting signals using TMDS.

In the examples illustrated in FIGS. 4 and 5, a receiver may determine not only the error rate of a test signal but also whether the reception quality of the test signal is good or bad. In another nonlimiting example, a receiver may determine the error rate of a test signal, and may transmit the results of the determination to a transmitter as transmission state information, and the transmitter may determine based on the transmission state information whether the reception quality of the test signal is good or bad.

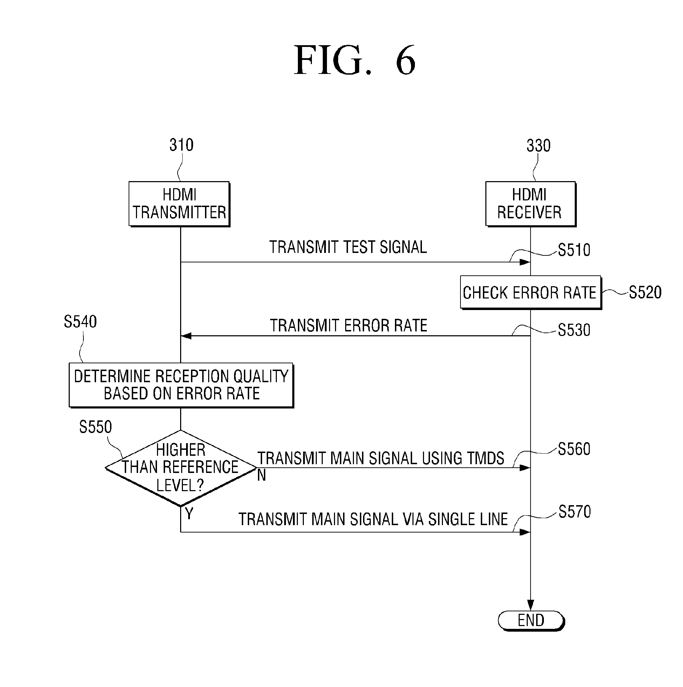

FIG. 6 is a flowchart illustrating an example of a transmitter determining whether the reception quality of a signal is good or bad based on the error rate of the signal.

Referring to FIG. 6, the HDMI transmitter 310 may transmit a test signal to the HDMI receiver 330 (S510). The HDMI receiver 330 may determine the error rate of the test signal based on the parity bit of the test signal (S520), and may feed back the results of the determination to the HDMI transmitter 310 (S530).

The HDMI transmitter 310 may determine the reception quality of a channel used to transmit the test signal based on the error rate of the test signal (S540). In response to the reception quality of the channel being lower than a predefined level (S550-N), the HDMI transmitter 310 may transmit a main signal to the HDMI receiver 330 using TMDS (S560). On the other hand, in response to the reception quality of the channel being higher than the predefined level (S550-Y), the HDMI transmitter 310 may transmit the main signal to the HDMI receiver 330 via a single line (S570).

In this manner, it is possible to effectively reduce the consumption of power and the occurrence of EMI. In a case in which only one of two communication lines is used to transmit a signal, the other communication line may be used for other communication purposes, thereby doubling the speed of the transmission of data, as compared to TMDS in which two communication lines are used to transmit a signal.

The examples illustrated in FIGS. 1 to 6 are merely exemplary. One or more reference levels may be set, and may be used to determine whether to transmit a signal via one line or via two lines. For example, there may be two reference levels set by a user (i.e., first and second levels). In this example, if the state of a channel is poorer than a channel state corresponding to the first level, a main signal may be transmitted via two lines. If the state of the channel is better than a channel state corresponding to the second level, the main signal may be transmitted via one line. If the state of the channel is better than the channel state corresponding to the first level but poorer than the channel state corresponding to the second level, a current state of the transmission of the main signal may be maintained.

A test signal may not necessarily be transmitted before the transmission of a main signal. In addition, a test signal and a main signal may not necessarily be separate signals. For example, a test signal may be transmitted during the transmission of a main signal, and a method to transmit the main signal may be changed based on the reception quality of the test signal during the transmission of the main signal. In another example, a main signal may be transmitted, and a method to transmit a subsequent main signal may be changed based on the reception of the main signal.

Since a method to transmit a main signal can be changed based on the reception quality of a test signal even during the transmission of the main signal, the reception quality of a channel may be determined at regular intervals of time set by a user, and the user may be allowed to determine whether to change the method to transmit the main signal periodically based on the results of the determination.

In the examples illustrated in FIGS. 1 to 6, a determination may be made as to whether to transmit a signal via one line or via two lines. However, there is no restriction to a maximum number of lines that can be used to transmit a signal. That is, the present invention can be applied to a case in which each channel has three lines. In this case, the reception quality of a channel may be classified in detail, and the number of lines used to transmit a signal may vary depending on the reception quality of the channel.

The examples illustrated in FIGS. 1 to 6 have been described, taking an HDMI interface as an example of an interface using TMDS or single-line signaling. However, the present invention can be applied to various interfaces for use in digital communication, such as, for example, DVI, Ethernet or the like, and various other interfaces that can transmit signals using differential signals.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

## Claims

1. A signal transmission method comprising:
transmitting a test signal via at least one of a plurality of lines that constitute a channel;
receiving transmission state information indicating a state of the transmission of the test signal; and
changing a number of lines for transmitting a main signal based on the transmission state information.

2. The signal transmission method of claim 1, wherein the transmission state information comprises information on an error rate of the test signal.

3. The signal transmission method of claim 1, wherein the transmitting comprises transmitting the test signal via two lines of the channel according to transition minimized differential signaling (TMDS).

4. The signal transmission method of claim 3, wherein the changing comprises, in response to the transmission state information being higher than a predefined level, changing the number of lines to one such that the main signal can be transmitted via one line.

5. The signal transmission method of claim 3, wherein the changing comprises, in response to the transmission state information being lower than a predefined level, maintaining the number of lines such that the main signal can continue to be transmitted via the two lines.

6. The signal transmission method of claim 1, wherein the changing comprises, in response to the test signal being transmitted via a plurality of channels and transmission state information indicating a state of the transmission of the test signal via each of the channels being received from each of the channels, changing the number of lines separately for each of the lines based on the transmission state information for each of the channels.

7. The signal transmission method of claim 1, wherein the receiving comprises receiving the transmission state information via at least one of the lines or another line.

8. The signal transmission method of claim 1, wherein the test signal is part of the main signal.

9. The signal transmission method of claim 1, further comprising:
transmitting the main signal via the changed number of lines; and
additionally changing the number of lines, during the transmission of the main signal, based on a state of the transmission of the main signal.

10. The signal transmission method of claim 1, wherein the transmitting comprises transmitting the test signal before the transmission of the main signal.

11. The signal transmission method of claim 1, wherein the transmitting comprises transmitting the test signal periodically or aperiodically during the transmission of the main signal.

12. A signal transmission apparatus comprising:
a transmitter which transmits a test signal via at least one of a plurality of lines that constitute a channel;
a receiver which receives transmission state information indicating a state of the transmission of the test signal; and
a controller which changes a number of lines for transmitting a main signal based on the transmission state information.

13. The signal transmission apparatus of claim 12, wherein the transmission state information comprises information on an error rate of the test signal.

14. The signal transmission apparatus of claim 12, wherein the transmitter transmits the test signal via two lines of the channel according to TMDS.

15. The signal transmission apparatus of claim 14, wherein, in response to the transmission state information being higher than a predefined level, the controller changes the number of lines to one so that the main signal can be transmitted via one line.

16. The signal transmission apparatus of claim 14, wherein, in response to the transmission state information being lower than a predefined level, the controller maintains the number of lines such that the main signal can continue to be transmitted via the two lines.

17. The signal transmission apparatus of claim 12, wherein, in response to the test signal being transmitted via a plurality of channels and transmission state information indicating a state of the transmission of the test signal via each of the channels being received from each of the channels, the controller changes the number of lines separately for each of the lines based on the transmission state information for each of the channels.

18. The signal transmission apparatus of claim 12, wherein the receiver receives the transmission state information via at least one of the lines or another line.

19. The signal transmission apparatus of claim 12, wherein the test signal is part of the main signal.

20. The signal transmission apparatus of claim 12, wherein the controller transmits the main signal via the changed number of lines, and additionally changes the number of lines, during the transmission of the main signal, based on a state of the transmission of the main signal.

21. The signal transmission apparatus of claim 12, wherein the test signal is transmitted before the transmission of the main signal.

22. The signal transmission apparatus of claim 12, wherein the test signal is transmitted periodically or aperiodically during the transmission of the main signal.

23. A signal transmission system comprising:
a receiving apparatus which receives a signal via one of a plurality of lines that constitute a channel, determines an error rate of the received signal, and feeds back the determined error rate to a transmitting apparatus; and
the transmitting apparatus which transmits a test signal to the receiving apparatus, receives an error rate of the test signal from the receiving apparatus, and changes a number of lines for transmitting a main signal based on the received error rate.
